# NEUE EUROPÄISCHE PATENTSCHRIFT

(11) **EP 1 843 866 B2**
(45) Veröffentlichungstag und Bekanntmachung des Hinweises auf die Entscheidung über den Einspruch: **21.05.2014**
(45) Hinweis auf die Patenterteilung: 26.01.2011
(21) Anmeldenummer: 05824450.0
(22) Anmeldetag: 20.12.2005
(51) Int. Cl.: B21K 9/00, B60M 1/30

(54) **VERBUNDPROFIL MIT EINEM TRAGKÖRPER AUS LEICHTMETALLWERKSTOFF SOWIE EINEM PROFILBAND UND VERFAHREN ZUM HERSTELLEN DES VERBUNDPROFILS**
COMPOSITE PROFILE PROVIDED WITH A SUPPORT BODY MADE OF A LIGHT METAL MATERIAL AND A PROFILED STRIP AND A METHOD FOR PRODUCING SAID PROFILE
PROFILE COMPOSITE COMPORTANT UN SUPPORT EN ALLIAGE LEGER ET UNE BANDE PROFILEE ET PROCEDE POUR PRODUIRE LEDIT PROFILE COMPOSITE

(30) Priorität: 31.01.2005 DE 102005004547
(43) Veröffentlichungstag der Anmeldung: 17.10.2007
(60) Teilanmeldung: 09008239.7
(73) Patentinhaber: Constellium Switzerland AG, 8048 Zürich (CH)
(72) Erfinder: WOEMPNER, Diethelm, 78351 Bodman-Ludwigshafen (DE); NETZEL, Timo, 78269 Volkertshausen (DE)
(74) Vertreter: Vötsch, Reiner
(86) Internationale Anmeldenummer: PCT/EP2005/013718
(87) Internationale Veröffentlichungsnummer: WO 2006/081863

(56) Entgegenhaltungen:
- EP-A- 0 535 865
- EP-A- 1 683 676
- DE-A1- 2 546 026
- DE-A1- 4 410 688
- US-A- 588 541
- US-A- 4 167 866
- US-A- 5 047 595
- US-B1- 6 983 834

## Beschreibung

Die Erfindung betrifft ein Verbundprofil mit einem aus Leichtmetallwerkstoff stranggepressten schienenartigen Tragkörper sowie einem dessen Kopffläche überspannenden Profilband aus einem härteren Metall nach dem Oberegriff des unabhängigen Ansprüche, wie es aus der US 5047595 A bekannt ist. Zudem erfasst die Erfindung ein Verfahren zum Herstellen eines solchen Verbundprofiles.

Die nachveröffentlichte EP 1 683 676 A1 beschreibt ein Schienenprofil aus Aluminium mit den Schienenkopf überspannendem Rinnenprofil, an dessen beide zueinander parallele Seitenschenkel jeweils ein seinerseits parallel zum Rinnenboden verlaufenden Metallstab rechteckigen Querschnittes angeschweißt ist; die Seitenflächen beider Metallstäbe fluchten miteinander und werden in entsprechend -- miteinander fluchtend -- gestaltete Seiteneinformungen des Schienenkopfes eingeschoben.

Der 1897 veröffentlichten US 588 541 A ist für elektrische Bahnsysteme ein Schienenprofil aus Stahl mit rinnenförmigem Abdeck- oder Verschlussprofil aus Kupfer zu entnehmen, das an zwei Seitenschenkeln endwärts angeformte stufenähnliche Innenstreifen etwa dreiecksförmigen Querschnittes aufweist; die beiden Stufenflächen fluchten etwa miteinander. Diese Innenstreifen greifen in entsprechend gestaltete Einformungen des Schienenkopfes ein; an deren jeweilige Firstfläche legt sich eine der Stufenflächen an.

Aus der DE 24 32 541 A1 geht ein Verfahren zum Herstellen von Stromschienen aus einem Trägerprofil und mindestens einer -- wenigstens einen Teil der Oberfläche des als Stromleiter dienenden Trägerprofils bildenden -- Auflage aus Profilband eines anderen Metalls als Deckprofil hoher Abriebfestigkeit hervor. Während eines Strangpreßvorganges wird das Trägerprofil mittels Auspressen eines Blockes durch den Formgebungsquerschnitt einer Pressmatrize erzeugt, und gleichzeitig durchläuft das Profilband zur Matrizenlängsachse parallel den Matrizendurchbruch oder Formgebungsquerschnitt. Während des Pressvorganges entsteht zwischen den beiden Profilkomponenten eine innige metallische Verbindung. Beispielsweise bei Einsatz der Stromschiene zur Elektrifizierung schienengebundener Fahrzeuge erfolgt in Fällen besonders hoher Belastung trotz der innigen metallischen Verbindung langfristig ein Loslösen des Profilbandes von seinem Tragprofil aus Leichtmetall.

Der DE 44 10 688 Al ist Verbundprofil mit einem Trägerprofil aus Leichtmetall und einem damit verbundenen Profilband zu entnehmen. Letzteres überspannt die Oberfläche eines Schienenkopfes des Trägerprofils, ist querschnittlich rin-nenähnlich geformt und weist in seinen Seitenschenkelnvon seiner tragkörperseitigen Innenfläche in Abstand zueinander abragende -- Ausformungen auf, welche in den Tragkörper eingebettet sind. Diese Ausformungen begrenzen hinterschnittene Zwischenräume, welche vom metallischen Werkstoff des Tragkörpers formschlüssig ausgefüllt sind. Diese formschlüssige Verbindung ist nicht mit den zur metallischen Verbindung beschriebenen Mängeln behaftet.

Ein Verbundleiterschienenelement zur Stromversorgung eines Bahnfahrzeugs mit einem Belag aus einem Werkstoff hohen mechanischen Widerstandes, der starr auf einem Stab aus elektrisch gut leitfähigem Material befestigt ist sowie die Gleit- bzw. Kontaktfläche für Stromabnehmer des Fahrzeuges bildet, offenbart die DE 25 46 026 A1. Die Befestigung des Belages auf dem als Träger dienenden leitfähigen Stab erfolgt dadurch, dass die Ränder des Belages in den leitfähigen Stab eingeklemmt bzw. eingequetscht werden. Es entsteht wenigstens eine in Längsrichtung verlaufende Eindrückung im Belag, die bis in den leitfähigen Stab eindringt. Für das Verklemmen der Ränder des Belages ist im leitfähigen Stab eine Nut vorgesehen, die eine Lippe abteilt. Letztere führt zum Verklemmen des Belages am leitfähigen Stab, sobald sie zumindest teilweise umgelegt und gegen den Rand des Belages gedrückt worden ist.

Als nachteilig haben sich auch Stromschienen erwiesen, deren Verschleißkomponente durch sie seitlich durchsetzende Schrauben oder zusätzliche Steckorgane am stromführenden Trägerprofil befestigt werden. Andere bekannte Herstellverfahren können nachteiligerweise zu Welligkeiten auf der Oberfläche des Deckprofiles führen, die ihre Ursache im schrittweisen Verstemmen bzw. Stanzen des Trägerprofiles haben.

In Kenntnis dieses Standes der Technik hat sich der Erfinder das Ziel gesetzt, die Verbindung zwischen Trägerprofil und Profilband gemäß der US 50 47595 A unter Beibehaltung der besonderen wirtschaftlichen Herstellungsmöglichkeiten weitergehend zu verbessern.

Zur Lösung dieser Aufgabe führt die Lehre der unabhängigen Anspruche; die Unteransprüche geben günstige Weiterbildungen an.

Nach einer bevorzugten Ausführungform entspricht die Dicke des Einsteckendes des profilartigen Einschubstabes der Breite des Steckschlitzes im Trägerprofil, so dass ein fester Sitz der Komponenten aneinander zustande kommt.

Als günstig hat es sich bei einem rinnenähnlich geformten Profilband erwiesen, das dem Schienenkopf eines schienenartigen Trägerprofils aufliegt, den Einschubstab mit eineman eine Grundplatte des Profilbandes angeformten -- Seitenschenkel zu verbinden sowie ihn anderseits mit wenigstens einem von jenem Seitenschenkel abragenden Stababschnitt in den entsprechend angeordneten Steckschlitz des Trägerprofils einzusetzen. Die Schweißnaht soll vorteilhafterweise an der Stirnfläche des Seitenschenkels jenes Profilbandes verlaufen.

Bevorzugt wird ein rinnenartiger Einschubstab etwa V-förmigen Querschnittes, der mit einem Rinnenschenkel der Innenseite des Seitenschenkels des Profilbandes anliegt; der andere Rinnenschenkel ist dann zur Längsachse des Profilbandes hin gerichtet. Bei dieser Ausgestaltung ist der Querschnitt des Schlitzes im Schienenkopf des Trägerprofils seinerseits V-förmig, wobei der in der Seiten- oder Längsfläche des Schienenkopfes verlaufende Schlitzschenkel von einer Längseinformung gebildet wird.

Ein anderer erfindungsgemäßer Einschubstab ist von winkelartigem Querschnitt, der mit einem Rinnenschenkel der Innenseite des Seitenschenkels anliegt; der andere Rinnenschenkel ist von der Grundplatte des Profilbandes wegoder alternativ: zu dieser hin -- geneigt. Hierbei soll der von den beiden Rinnenschenkeln begrenzte Winkel mehr als 90° messen, bevorzugt etwa 110°.

Im Rahmen der Erfindung liegt auch ein Einschubstab mit etwa halbkreisförmigem Querschnitt, der im Zenit seiner Wölbung mit der Außenfläche an die Kante der Stirnfläche des Seitenschenkels des Profilbandes so angeschweißt ist, dass die beiden Einschubstäbe des Profilbandes in einer gemeinsamen Mittelachse sowie zueinander geöffnet angeordnet sind. Diese Mittelachse kreuzt die Querschnittsachse des Verbundprofils, die wiederum parallel zu dessen Seitenflächen steht. Zudem soll die Mittelachse der Einschubstäbe in jeder der beiden Längsflächen des Schienenkopfes die Lage eines Wulstes bestimmen, dessen Querschnitt der Form des Innenraumes des an ihn anzufügenden Einschubstabes angepasst ist und der beidseits von jeweils einem Einschubschlitz für die freie Kante des Einschubstabes begrenzt ist.

Der Querschnitt einer anderen erfindungsgemäßen Ausgestaltung des Einschubprofils oder -stabes für den Schienenkopf besteht aus einem Viertelkreisabschnitt und einem linearen Abschnitt, welch letzterer dem Seitenschenkel des Profilbandes innenseitig anliegt und mit dessen Stirnfläche verschweißt ist. Diese Viertelkreisabschnitte der beiden Einschubstäbe können zur Grundplatte des Profilbandes hin gerichtet sein oder aber von dieser weg. Der Schlitz des Schienenkopfes für den linearen Abschnitt des Einschubstabes soll hier eine Längseinformung in der Längsfläche des Schienenkopfes enthalten. Im übrigen ist darauf zu achten, dass die Paarungen gleichförmiger Einschubstäbe spiegelbildlich gleiche Ausgestaltung anbieten.

Nach einem anderen Merkmal der Erfindung ist ein querschnittlich hakenartiger Einschubstab mit -- in Abstand zum Seitenschenkel verlaufendem -- zur Grundplatte des Profilbandes gerichtetem freien Hakenabschnitt andernends an die Stirnfläche des Seitenschenkels angeschweißt.

Zudem hat es sich als günstig erwiesen, die schlitzartige Einformung des Schienenkopfes von einer in Abstand zur Oberfläche des Schienenkopfes angeformten und von der Unterfläche des Schienenkopfes begrenzten Längsrippen untergreifen zu lassen.

Bei einer alternativen Ausgestaltung zu der weiter oben beschriebenen Anbringung des querschnittlich hakenartigen Einschubstabes mit in Abstand zur Innenfläche des Seitenschenkels des Profilbandes verlaufendem freien Hakenabschnitt weist dieser von der Grundplatte des Profilbandes weg, also zum Fußbereich des Verbundprofils hin. Auch dieser Einschubstab ist an die Stirnfläche des Seitenschenkels angeschweißt.

Eine andere Ausbildung erfasst einen querschnittlich stufenartigen Einschubstab, der einends an der Innenfläche des Profilband-Seitenschenkels verschweißt ist und andernends mit seinem freien Hakenende eine Zapfenleiste in der Längsfläche des Schienenkopfes hintergreift.

Auch eine andere Gestalt des Schienenkörpers liegt im Rahmen der Erfindung, nämlich ein kastenartiges Trägerprofil, auf dessen Oberfläche ein plattenförmiges Profilband aufliegt, an dessen Längskanten jeweils ein Einschubstab durch eine Schweißnaht gehalten wird. Hier ist die Breite des Profilbandes kürzer als die Breite des Trägerprofils, und jeder der Einschubstäbe ist in einen Schlitz eingeschoben, der einer Stufeneinformung im Trägerprofil zugeordnet ist.

Die Erfindung erfasst auch ein Verfahren zum Herstellen eines Verbundprofils, bei dem aus Leichtmetallwerkstoff ein Trägerprofil mit einer Kopffläche sowie diese beidseits begleitenden Steckschlitzen stranggepresst wird, zudem in jedem Steckschlitz ein Einschubstab eingebracht und an einen aus dem Steckschlitz ragenden Abschnitt des Einschubstabes ein die Kopffläche übergreifendes Profilband angelegt wird. Der Einschubstab wird mit dem Profilband durchgehend verschweißt.

Zuerst werden also die als Verankerungsstreifen, Ankerstäbe oder Einschubstäbe in das Leichtmetallprofil, insbesondere in ein AL-Basisprofil, eingelegt bzw. eingedrückt oder eingerollt oder auch vor dem Verschweißen bzw. im Nachhinein durch bleibende Verformung des Trägerprofils festgerollt oder festgedrückt. Vorgesehen ist dann mit Hilfe einer Andruckrolle mit großem Durchmesser das Edelstahl-Deckprofil auf das Leichtmetall-Trägerprofil zu drücken und unter dieser Vorspannung gleichzeitig rechts und links die Verankerungsstreifen oder Einschubstäbe mit dem Deckprofil zu verschweißen.

Im übrigen ist das sog. Deckprofil bevorzugt ein von einem Walzcoil geschnittenes Edelstahlband, das durch Rollformen in die gewünschte Form gebracht bzw. als geschnittenes Band direkt eingesetzt wird. Der Einschubstab ist ein Edelstahlband -- vorzugsweise die gleiche Legierung wie das Deckprofil -- das vorteilhafter Weise vom Walzcoil geschnitten und durch Rollformen/Abkanten/Aufbörteln/Umbörteln in die gewünschte Form gebracht worden ist.

Um die eingangs erwähnten Mängel zu beseitigen, wird ein kontinuierlich ablaufendes Verbundprofil -- wie Strangpressen für das Trägerprofil und Rollformen -- über die ganze Profillänge von Deckprofil und Einschubstäben bzw. Verankerungsprofilen vorgeschlagen. Die Verbindung wird durch kontinuierliches Schweißen über die Profillänge durchgeführt.

Gefordert wird eine größtmögliche Breite der Schleiffläche mit Bestreichmöglichkeit von der Seite und eine mechanische Verankerung, die auch bei komplett abgenutzten Verschleißprofilen eine Verankerung der dann zwei Restschleifflächen gewährleistet. Zudem ist eine Reduzierung der Einbau-Höhentoleranzen gegenüber bekannten Verbundprofilen erwünscht. Wünschenswert ist auch eine lokale Fertigungsmöglichkeit weltweit, ohne eine große Leichtmetall-Strangpresse aufrüsten zu müssen.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
- Fig. 1, 9:: jeweils eine Schrägsicht auf einen Abschnitt eines schienenartigen Verbundprofils aus zwei Verbundpartnern;
- Fig. 2:: den Querschnitt durch das Verbundprofil der Fig. 1 in etwa natürlicher Größe mit einem aus dem Verbundprofil herausgenommenen Bauteil;
- Fig. 3, 4:: jeweils einen gegenüber Fig. 2 verkleinerten Querschnitt durch ein Verbundprofil anderer Ausgestaltung;
- Fig. 5,6,7(rechts):: jeweils zwei Hälften der Querschnitte zweier unterschiedlicher Verbundprofile;
- Fig. 7(links), 8:: jeweils zwei Hälften der Querschnitte zweier nicht von der Erfindung erfassten unterschiedlicher Verbundprofile;
- Fig. 10:: den Querschnitt durch das Verbundprofil der Fig. 9;
- Fig. 11:: eine Stirnansicht des einen Verbundpartners;
- Fig. 12:: eine Seitenansicht zweier Elemente des Verbundpartners der Fig. 11;
- Fig. 13:: die beiden Verbundpartner der Fig. 10 vor dem Zusammenbau;
- Fig. 14 bzw. 18:: zwei weitere Ausgestaltungen von Verbundprofilen aus zwei Verbundpartnern;
- Fig. 15 bzw. 19:: eine Stirnansicht des einen Verbundpartners in Fig. 14 bzw. 18;
- Fig. 16 bzw. 20:: eine Seitenansicht zweier Elemente des Verbundpartners der Fig. 15 bzw. 19;
- 19, 20:: den Elementen der Fig. 11, 12 entsprechende Darstellungen zu Fig. 14 bzw. 18;
- Fig. 17 bzw. 21:: jeweils die beiden Verbundpartner der Fig. 14 bzw. 18 vor deren Zusammenbau;
- Fig. 22 bis 24:: drei andere Ausgestaltungen von Verbundprofilen in Stirnansicht.

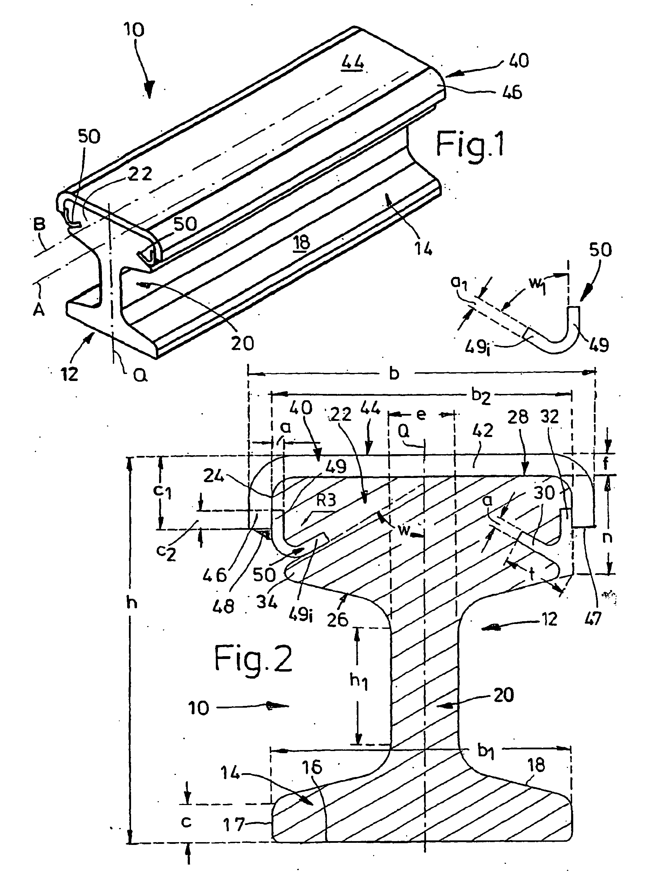

Ein Verbundprofil 10 der Höhe h von hier 105 mm und der maximalen Breite b von 92 mm weist nach Fig. 1 ein schienenartiges Trägerprofil 12 mit einem Schienenfuß 14 und einem an diesen mittels eines Schienensteges 20 angeformten strangartigen Schienenkopf 22 auf. Zwei die Fußfläche 16 des Schienenfußes 14 begrenzende Längskanten 17 der Höhe c von 10 mm verlaufen in einem Abstand b₁ von hier 80 mm parallel zueinander.

Von diesen Längskanten 17 sind die beiden Dachflächen 18 des Schienenfußes 14 zu der die Längsachse A des Verbundprofils 10 querenden Querschnittsmittelachse Q geringfügig aufwärts geneigt und gehen in jenen Schienensteg 20 der Höhe h₁ von etwa 30 mm sowie der Dicke e von etwa 18 mm über. Vom oberen Ende des Schienensteges 20 gehen die zu den Längskanten 24 des Schienenkopfes 22 etwa aufwärts geneigten Unterflächen 26 dieses Schienenkopfes 22 einer Breite b₂ von 78 mm ab, dessen Außenhöhe n von etwa 28 mm die Lage der Schienenkopf-Oberfläche 28 bestimmt.

Von jeder der Längskanten 24 des Schienenkopfes 22 geht in Fig. 1 ein in einem Winkel w von etwa 60° aufwärts geneigter Steckschlitz 30 der Breite a von hier 4 mm und der Tiefe t von 18 mm aus, dessen in Fig. 2 untere Wandfläche in eine Art Längsrippe 34 des Schienenkopfes 22 übergeht, deren Außenseite von jener Unterfläche 26 gebildet wird. In die Längskante 24 ist eine Längseinformung 32 eingebracht als räumliche Verlängerung des querschnittlich V-artigen Schlitzes 30, die auch dessen Breite a anbietet.

Dieses Schienen- oder Trägerprofil 12 des Verbundprofils 10 wird in einer aus Gründen der Übersichtlichkeit in der Zeichnung nicht wiedergegebenen Strangpresse aus einem Leichtmetallwerkstoff geformt.

Die Kopf- oder Oberfläche 28 des Schienenprofils 12 bzw. seines Schienenkopfes 22 wird in Endzustand von einem Profilband 40 der Dicke f von 6 mm überspannt, das aus einem Eisen- oder Buntmetall hergestellt ist. Dieses Profilband 40 ist querschnittlich rinnenartig geformt, und seine von einer Grundplatte 42 ausgehenden -- zueinander sowie zur Längsachse B des Profilbandes 40 parallelen -- Seitenschenkel 46 der Höhe c₁ von 20 mm liegen den Längskanten 24 des Schienenkopfes 22 an. In dieser Lage bildet die Außenfläche 44 des Profilbandes 40 die Oberfläche des Verbundprofils 10.

Jedem Seitenschenkel 46 des der Oberfläche 28 des Schienenkopfs 22 aufliegenden Profilbandes 40 ist im Ausführungsbeispiel der Fig. 1, 2 innenseitig ein rinnenartiger Einschubstab 50 etwa V-förmigen Querschnitts eines Öffnungswinkels w₁ von etwa 65° achsparallel zugeordnet, dessen Rinnenschenkel 49, 49ᵢ eine Dicke a₁ anbieten, die mit geringem Spiel der Breite a des Steckschlitzes 30 entspricht. Der eine dieser querschnittlich linearen Rinnenschenkel 49 liegt mit seiner Außenseite -- parallel zur Querschnittslängsachse Q verlaufend -- dem Seitenschenkel 46 des Profilbandes 40 innenseitig in einer Berührungsbreite c₂ von 5 mm an und ist mit diesem durch eine bei 48 angedeutete Schweißnaht dichtend verschweißt. Diese verläuft an der Stirnfläche 47 des Profilband-Seitenschenkels 46. Der andere Rinnenschenkel 49ᵢ ist in den benachbarten Schlitz 30 des Schienenkopfes 22 eingefügt. So entsteht ein dauerhafter und dichter Verbund der beiden Verbundpartner 12, 40 des Verbundprofils 10.

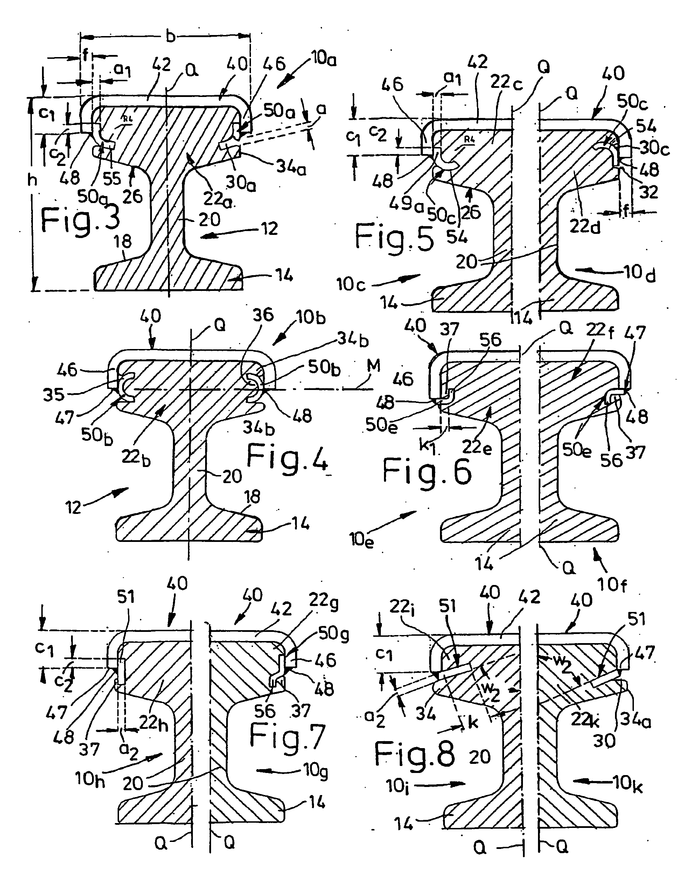

Der Schienenkopf 22ₐ des Verbundprofils 10ₐ nach Fig. 3 weist statt eines V-artigen Schlitzes einen querschnittlich winkelartig gebogenen Steckschlitz 30ₐ der Breite (Radius 4 mm) für einen entsprechend geformten Einschubstab 50ₐ des Profilbandes 40 auf, das an sich entsprechend Fig. 2 gestaltet ist. Zum Schienenfuß 14 hin wird der Steckschlitz 30ₐ durch eine aufwärts geneigte Längsrippe 34ₐ des Schienenkopfes 22ₐ begrenzt. Dieser Steckschlitz 30ₐ nimmt das freie Ende 55 des Querschnitts des Einschubstabes 50ₐ auf, das in Seitenansicht ein Längsstreifen ist.

Auch das Profilband 40 der Fig. 4 ist i.w. entsprechend dem der Fig. 2 gestaltet; bei diesem Verbundprofil 10_{b} sind allerdings die beiden Einschubprofile oder Einschubstäbe 50_{b} querschnittlich halbkreisförmig gebogen und jeweils in ihrem Zenit an die Stirnfläche 47 eines Seitenschenkels 46 des Profilbandes 40 angeschweißt. Die sich in einer die Querschnittslängsachse Q kreuzenden Mittelachse M zueinander öffnenden Einschubstäbe 50_{b} umgreifen am Schienenkopf 22_{b} einen Wulst 36 mit teilkreisförmiger Querschnittskontur, den beidseits -- unter Bildung von Einschubschlitzen 35 für die Querschnittsenden des Einschubstabes 50_{b}Längsrippen 34_{b} begrenzen.

Fig. 5 zeigt jeweils eine an der Querschnittslängsachse Q endende Hälfte zweier Verbundprofile 10_{c}, 10_{d}; die nicht gezeigte andere Hälften ist jeweils entsprechend gestaltet. Dem Profilband 40 der in Fig. 5 linken Ausbildung ist ein Einschubstab 50_{c} der Dicke a₁ zugeordnet, dessen Querschnitt aus einem Viertelkreisabschnitt 54 und einem linearen Abschnitt besteht, der mit dem entsprechenden Seitenschenkel 46 des Profilbandes 40 verschweißt ist. Jener Viertelkreisabschnitt 54 ragt zum Schienenfuß 14 hin. Bei der Ausgestaltung der rechten Seite von Fig. 5 ist der Einschubstab 50_{c} so festgelegt, dass der Viertelkreisabschnitt 54 zur Grundplatte 42 des Profilbandes 40 gerichtet ist. In beiden Verbundprofilen 10_{c}, 10_{d} ruht der lineare Abschnitt in einer Längseinformung 32 des Schienenkopfes 22_{c} bzw. 22_{d}, die in einen querschnittlich gekrümmten Schlitz 30_{c} übergeht.

Auch die Fig. 6 zeigt zwei gegenläufig gerichtete Einschubprofile oder Einschubstäbe 50ₑ, winkelförmiger bzw. hakenartiger -- und an sich gleichgestalteter -- Querschnittsform mit entsprechenden Schlitzen im Schienenkopf 22ₑ bzw. 22_{f} des Verbundprofils 10ₑ, 10_{f}. Auch diese Einschubstäbe 50ₑ sind an der Stirnfläche 47 des Profilband-Seitenschenkels 46 verschweißt und hintergreifen mit ihrem freien Hakenabschnitt 56 eine achsparallele Zapfenleiste 37 der Breite k₁ des Schienenkopfes 22ₑ bzw. 22_{f}.

Ein querschnittlich i.w. stufenartiger Einschubstab 50_{g} verläuft im Verbundprofil 10_{g} der Fig. 7 (rechts); er ist zum einen an der Innenfläche des Seitenschenkels 46 verschweißt und hintergreift zum anderen mit seinem freien Hakenende 56 eine Zapfenleiste 37 in der Längsfläche 24 des Schienenkopfes 22_{g}.

An den Seitenschenkel 46 des Profilbandes 40 von Verbundprofil 10ₕ der Fig. 7 (links) ist ein nicht von der Erfindung umfasster querschnittlich linearer Einschubstab 51 der Dicke a₂ von 4 mm innenseitig angelegt und mit der Stirnfläche 47 des Seitenschenkels 46 so verschweißt, dass auch das -- zu letzterem parallele -- freie Querschnittsende eine Zapfenleiste 37 des Schienenkopfes 22ₕ hintergreift.

In den beiden ebenfalls nich von der Erfindung umfassten Ausführungsbeispielen der Fig. 8 ist an die Stirnkante oder Stirnfläche 47 von jedem der Seitenschenkel 46 des Profilstabes 40 ein linearer Einschubstab 51 der freien Länge k von 15 mm so angeschweißt, dass er in einem Winkel w₂ von etwa 70° bis 75° zur Querschnittslängsachse Q nach innen verläuft. Im Verbundprofil 10ᵢ der linken Figurenseite ist der Einschubstab 51 zur Grundplatte 42 hin gerichtet, im anderen Verbundprofil 10ₖ zeigt er von der Grundplatte 42 weg. Die entsprechenden Schlitze 30 im Schienenkopf 21ᵢ bzw. 22ₖ verlaufen jeweils oberhalb einer Längsrippe 34 bzw. 34ₐ.

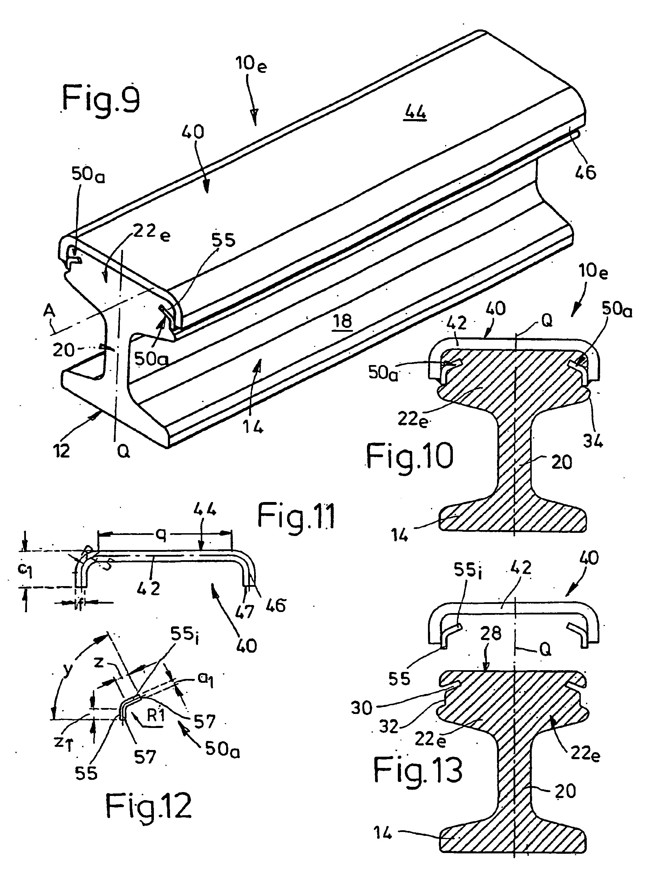

Das Verbundprofil 10ₑ der Fig. 9 bis 13 enthält zwei Einschubstäbe 50ₐ, deren Form zu Fig. 3 beschrieben worden ist. Im Gegensatz zu jener Darstellung weisen hier die freien Enden 55 der Einschubstäbe 50ₐ aufwärts, also zur Grundplatte 42 des Profilbandes 40 hin.

Der Fig. 11 ist die genaue Ausbildung des Profilbandes 40 zu entnehmen, dessen gerade Breite q hier 68 mm misst bei einer gestreckten Länge von etwa 116 mm und einer Fläche von etwa 697 mm² [Mat. 1.4016 (X 6 Cr 17), mit 5373,1 g/m].

Der Einschubstab 50ₐ der Fig. 12 bestimmt mit seinen beiden Profilschenkeln 55, 55ᵢ der Länge z von 7,8 mm bzw. 5,8 mm (z₁) bzw. den Stirnflächen 57 einen Winkel y von 65°. Fig. 13 zeigt die Länge der oben beschriebenen Schlitze 30 und Längseinformungen 32 im Schienenkopf 22ₑ.

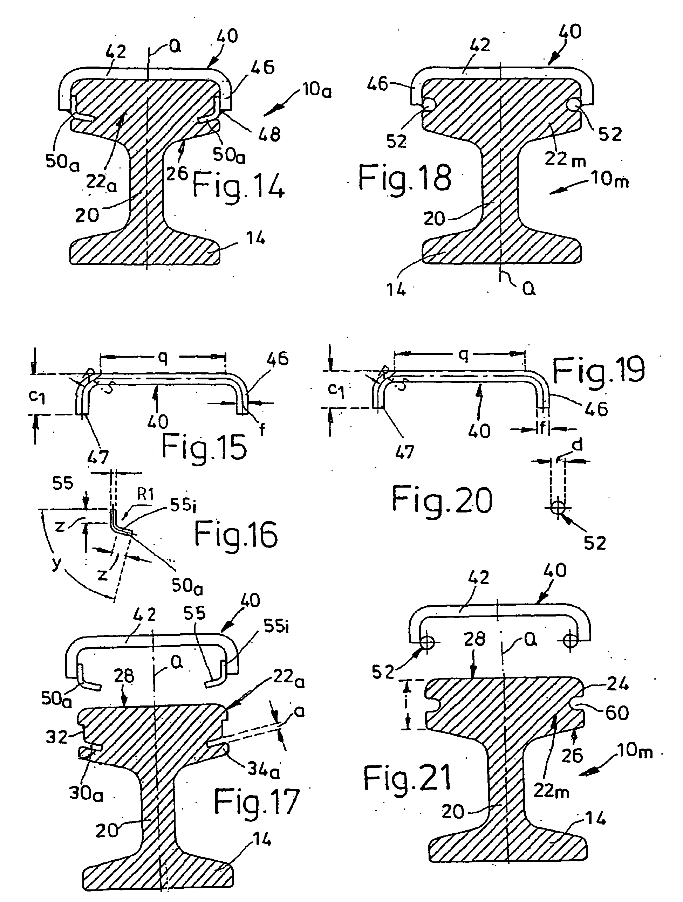

Die Fig. 14 bis 17 zeigen den zu den Fig. 10 bis 13 erörterten Zyklus für das Ausführungsbeispiel der Fig. 3. Fig. 15 entspricht dabei der Fig. 11. In Fig. 16 misst die Länge z bzw. z₁ beider Profilschenkel 55, 55ᵢ des Einschubstabes 50ₐ 5,6 mm und der Winkel y hier 76°.

An die Seitenschenkel 46 des Profilbandes 40 der ebenfalls nich von der Erfindung umfassten Fig. 18 bis 21 ist innenseitig jeweils ein Rundstab 52 des Durchmessers d von 7 mm angeschweißt. Hier beträgt die gestreckte Länge etwa 112 mm, die Fläche etwa 674 mm [Mat. 14016 (X6Cr17) 5189,8 g/m)].

Zur klemmenden Aufnahme des Rundstabes 52 ist in die Höhenmitte der Längskanten oder -flächen 24 einer Höhe i von 28 mm des Schienenkopfes 22ₙ jeweils eine Längsnut 60 eingeformt, deren Nutentiefstes querschnittlich von einem Halbkreis bestimmt ist.

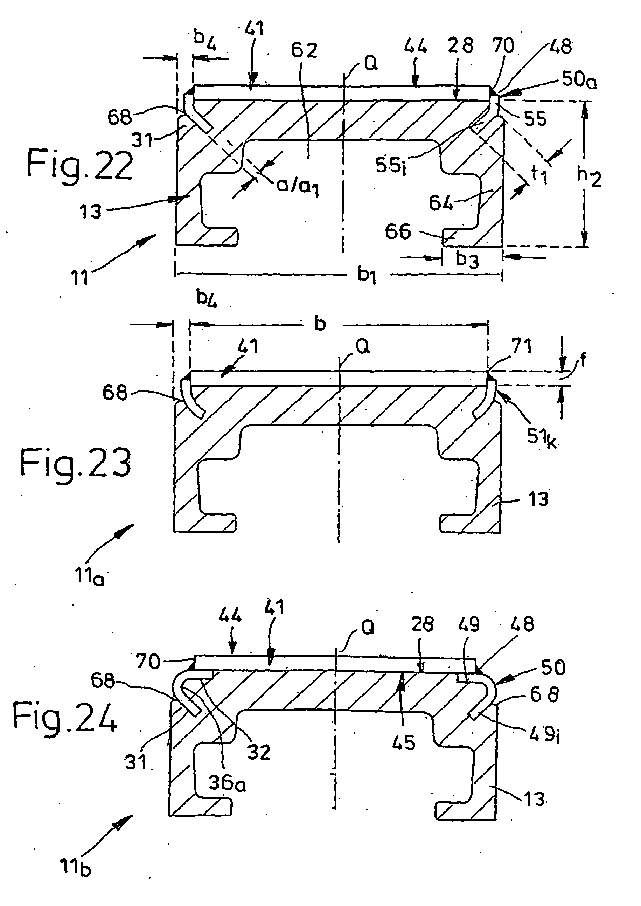

Das kastenartige Trägerprofil 13 des Verbundprofils 11 der Fig. 22 bis 24 weist eine i.w. rechteckige Querschnittsform der Breite b₁ von 105 mm sowie der Höhe h₂ von 50 mm auf und ist mit einem Innenraum 62 versehen, der beidseits von Profilschenkeln 64 begrenzt ist, von denen jeweils -- parallel zur Oberfläche 28 und miteinander fluchtende -- Bodenstege 66 der Breite b₃ von 20 mm abragen. Jene Oberfläche 28 ist schmaler als das Trägerprofil 13, da jede von dessen oberen Eckkanten eine Stufeneinformung 68 der Breite b₄ von 5 mm aufweist. Von letzterer geht in Fig. 22 ein i.w. diagonal zur Querschnittsfläche gerichteter Schlitz 31 der Breite a von etwa 3 mm und der Länge t₁ von etwa 9 mm aus. Der Schlitz 31 dient der Aufnahme eines querschnittlich winkelartigen Einschubstabes 50ₐ, der mit einem Profilschenkel 55ᵢ an die Längskante 70 eines plattenförmigen Profilbandes 44 angeschweißt ist, dessen Breite b etwa 95 mm misst bei einer Dicke f von 5 mm. Der freie Profilschenkel 55 sitzt im Schlitz 31.

Die Verbundprofile 11ₐ und 11_{b} bzw. deren Trägerprofile 13 der Fig. 23 bzw. 24 unterscheiden sich durch die Form der Einschubprofile oder Einschubstäbe 51ₖ bzw. 50 ihrer Profilbänder 41. Der Einschubstab 51ₖ der Fig. 23 ähnelt jenem des Verbundprofils 10ₕ, ist jedoch geringfügig gebogen. Der Einschubstab 50 der Fig. 24 entspricht jenem der Fig. 1, 2.

Er ist jedoch mit einem Rinnenschenkel 49 an die Unterfläche 41 des Profilbandes 41 angelegt und so verschweißt; die Schweißnaht 48 verläuft an der Längskante 70 des Profilbandes 41 und der Außenfläche des Rinnenschenkels 49. Der Eckbereich des Trägerprofils 13 ist entsprechend gestaltet mit einer Längseinformung 32 in der Kopf- oder Oberfläche 28 des Trägerprofils 13_{b} und jener Stufeneinformung 68, zwischen denen ein Wulst 36ₐ parallel zur Profillängsachse verläuft.

## Patentansprüche

1. Verbundprofil mit einem aus Leichtmetallwerkstoff stranggepressten Trägerprofil (12, 13) sowie einem dessen Kopffläche (28) überspannenden Profilband (40, 41) aus einem härteren Metall, wobei das Profilband (40, 41) in etwa an der Kopffläche (28) des Trägerprofils (12, 13) aufliegt,
**dadurch gekennzeichnet,**
**dass** an den Längsseiten des Profilbandes (40) jeweils ein zu seiner Längsachse (B) paralleler Einschubstab (50) angefügt ist, wobei der Einschubstab (50) mit seinem Profilband (40) durch eine Schweißnaht (48) verbunden ist, dass der Einschubstab (50) in einen seitlichen Schlitz (30) des Trägerprofils (12, 13) eingreift, und dass der rinnenartige Einschubstab (50) einen etwa V-förmigen Querschnitt aufweist, der mit einem Rinnenschenkel (49) an der Innenseite des Seitenschenkels (46) des Profilbandes (40) anliegt, wobei der andere Rinnenschenkel (49ᵢ) zur Längsachse (B) des Profilbandes (40) hin gerichtet ist.

2. Verbundprofil nach Anspruch 1, **gekennzeichnet durch** einen V-förmigen Querschnitt des Schlitzes (30) im Schienenkopf (22) des Trägerprofils (12), wobei einer der Schlitzschenkel eine Längseinformung (32) in der Seiten- oder Längsfläche (24) des Schienenkopfes (22) ist.

3. Verbundprofil nach Anspruch 1 oder 2, **gekennzeichnet durch** einen Öffnungswinkel (w₁) des Rinnenquerschnittes von etwa 60° bis 70°, bevorzugt 65°.

4. Verbundprofil mit einem aus Leichtmetallwerkstoff stranggepressten Trägerprofil (12, 13) sowie einem dessen Kopffläche (28) überspannenden Profilband (40, 41) aus einem härteren Metall, wobei das Profilband (40, 41) in etwa an der Kopffläche (28) des Trägerprofils (12, 13) aufliegt,
**dadurch gekennzeichnet,**
**dass** an den Längsseiten des Profilbandes (40, 41) jeweils ein zu seiner Längsachse (B) paralleler Einschubstab (50ₐ) angefügt ist, wobei der Einschubstab (50ₐ) mit seinem Profilband (40, 41) durch eine Schweißnaht (48) verbunden ist, dass der Einschubstab (50a) in einen seitlichen Schlitz (30a, 31) des Trägerprofils (12, 13) eingreift, und dass der Einschubstab (50ₐ) einen winkelartigen Querschnitt aufweist, der mit einem Rinnenschenkel (55) der Innenseite des Seitenschenkels (46) des Profilbandes (40, 41) anliegt, wobei der andere Rinnenschenkel (55ᵢ) von der Grundplatte (42) des Profilbandes (40, 41) weg oder zu dieser hin geneigt ist.

5. Verbundprofil nach Anspruch 4,
**dadurch gekennzeichnet,**
**dass** der von den beiden Rinnenschenkeln (55, 55ᵢ) begrenzte Winkel größer als 90° ist, bevorzugt etwa 110°.

6. Verbundprofil mit einem aus Leichtmetallwerkstoff stranggepressten Trägerprofil (12, 13) sowie einem dessen Kopffläche (28) überspannenden Profilband (40, 41) aus einem härteren Metall, wobei das Profilband (40, 41) in etwa an der Kopffläche (28) des Trägerprofils (12, 13) aufliegt,
**dadurch gekennzeichnet,**
**dass** an den Längsseiten des Profilbandes (40) jeweils ein zu seiner Längsachse (B) paralleler Einschubstab (50_{b}) angefügt ist, wobei der Einschubstab (50_{b}) mit seinem Profilband (40) durch eine Schweißnaht (48) verbunden ist, dass der Einschubstab (50_{b}) in einen seitlichen Schlitz (35) des Trägerprofils (12) eingreift, und dass der etwa halbkreisförmige Einschubstab (50_{b}) in seinem Zenit an die Stirnfläche (47) des Seitenschenkels (46) des Profilbandes (40) angeschweißt ist.

7. Verbundprofil nach Anspruch 6,
**dadurch gekennzeichnet,**
**dass** die beiden Einschubstäbe (50_{b}) des Profilbandes (40) an einer gemeinsamen Mittelachse (M) zueinander geöffnet angeordnet sind.

8. Verbundprofil nach Anspruch 7,
**dadurch gekennzeichnet,**
**dass** die Mittelachse (M) der Einschubstäbe (50_{b}) eine Querschnittslängsachse (Q) des Verbundprofils (10_{b}) kreuzt.

9. Verbundprofil nach Anspruch 7 oder 8,
**dadurch gekennzeichnet,**
**dass** die Mittelachse (M) der Einschubstäbe (50_{b}) in jeder der beiden Längsflächen (24) des Schienenkopfes (22_{g}) die Lage eines Wulstes (36) bestimmt, dessen Querschnitt der Form des Innenraumes des Einschubstabes angepasst ist und der beidseits von jeweils einem Einschubschlitz (35) begrenzt ist.

10. Verbundprofil mit einem aus Leichtmetallwerkstoff stranggepressten Trägerprofil (12, 13) sowie einem dessen Kopffläche (28) überspannenden Profilband (40, 41) aus einem härteren Metall, wobei das Profilband (40, 41) in etwa an der Kopffläche (28) des Trägerprofils (12, 13) aufliegt,
**dadurch gekennzeichnet,**
**dass** an den Längsseiten des Profilbandes (40) jeweils ein zu seiner Längsachse (B) paralleler Einschubstab (50_{c}) angefügt ist, wobei der Einschubstab (50_{c}) mit seinem Profilband (40) durch eine Schweißnaht (48) verbunden ist, dass der Einschubstab (50_{c}) in einen seitlichen Schlitz (30_{c}) des Trägerprofils (12) eingreift, und dass der Querschnitt des Einschubstabes (50_{c}) für den Schienenkopf (22_{d}) aus einem Viertelkreisabschnitt (54) und einem linearen Abschnitt (49_{c}) besteht, welch letzterer dem Seitenschenkel (46) des Profilbandes (40) innenseitig anliegt und mit dessen Stirnfläche (47) verschweißt ist.

11. Verbundprofil nach Anspruch 10,
**dadurch gekennzeichnet,**
**dass** die Viertelkreisabschnitte (54) der beiden Einschubstäbe (50_{c}) zur Grundplatte (42) des Profilbandes (40) hin oder von dieser weg gerichtet sind.

12. Verbundprofil nach Anspruch 10 oder 11,
**dadurch gekennzeichnet,**
**dass** der Schlitz (30_{c}) des Schienenkopfes (22_{d}) für den linearen Abschnitt (49_{c}) des Einschubstabes (50_{c}) eine Längseinformung (32) in der Längsfläche (24) des Schienenkopfes (22_{d}) enthält.

13. Verbundprofil mit einem aus Leichtmetallwerkstoff stranggepressten Trägerprofil (12, 13) sowie einem dessen Kopffläche (28) überspannenden Profilband (40, 41) aus einem härteren Metall, wobei das Profilband (40, 41) in etwa an der Kopffläche (28) des Trägerprofils (12, 13) aufliegt,
**dadurch gekennzeichnet**,
an den Längsseiten des Profilbandes (40) jeweils ein zu seiner Längsachse (B) paralleler Einschubstab (50ₑ) angefügt ist, wobei der Einschubstab (50ₑ) mit seinem Profilband (40) durch eine Schweißnaht (48) verbunden ist, dass der Einschubstab (50ₑ) in einen seitlichen Schlitz des Trägerprofils (12) eingreift, und dass der querschnittlich hakenartige Einschubstab (50ₑ) mit in Abstand (k₁) zum Profilband-Seitenschenkel (46) verlaufendem, zur Grundplatte (42) des Profilbandes (40) gerichtetem freiem Hakenabschnitt (56) andernends an die Stirnfläche (47) des Seitenschenkels (46) angeschweißt ist.

14. Verbundprofil mit einem aus Leichtmetaltwerkstoff stranggepressten Trägerprofil (12, 13) sowie einem dessen Kopffläche (28) überspannenden Profilband (40, 41) aus einem härteren Metall, wobei das Profilband (40, 41) in etwa an der Kopffläche (28) des Trägerprofils (12, 13) aufliegt,
**dadurch gekennzeichnet,**
**dass** an den Längsseiten des Profilbandes (40) jeweils ein zu seiner Längsachse (B) paralleler Einschubstab (50ₑ) angefügt ist, wobei der Einschubstab (50ₑ) mit seinem Profilband (40) durch eine Schweißnaht (48) verbunden ist, dass der Einschubstab (50ₑ) in einen seitlichen Schlitz des Trägerprofils (12) eingreift, und dass der querschnittlich hakenartige Einschubstab (50ₑ) mit in Abstand (k₁) zum Seitenschenkel (46) des Profilbandes (40) von dessen Grundplatte (42) weg gerichtetem freien Hakenabschnitt (56) andernends an die Stirnfläche (47) des Seitenschenkels angeschweißt ist.

15. Verbundprofil mit einem aus Leichtmetallwerkstoff stranggepressten Trägerprofil (12, 13) sowie einem dessen Kopffläche (28) überspannenden Profilband (40, 41) aus einem härteren Metall, wobei das Profilband (40, 41) in etwa an der Kopffläche (28) des Trägerprofils (12, 13) aufliegt,
**dadurch gekennzeichnet,**
**dass** an den Längsseiten des Profilbandes (40) jeweils ein zu seiner Längsachse (B) paralleler Einschubstab (50_{g}) angefügt ist, wobei der Einschubstab (50_{g}) mit seinem Profilband (40) durch eine Schweißnaht (48) verbunden ist, dass der Einschubstab (50_{g}) in einen seitlichen Schlitz des Trägerprofils (12) eingreift, und dass ein querschnittlich stufenartiger Einschubstab (50_{g}) vorgesehen ist, der einerseits an der Innenfläche des Profilband-Seitenschenkels (46) verschweißt ist und andernends mit seinem freien Hakenende (56) eine Zapfenleiste (37) der Längsfläche (24) des Schienenkopfes (22_{g}) hintergreift.

16. Verbundprofil mit einem aus Leichtmetallwerkstoff stranggepressten Trägerprofil (12, 13) sowie einem dessen Kopffläche (28) überspannenden Profilband aus einem härteren Metall, wobei das Profilband in etwa an der Kopffläche (28) des Trägerprofils (12, 13) aufliegt,
**dadurch gekennzeichnet,**
**dass** an den Längsseiten des Profilbandes (44) jeweils ein zu seiner Längsachse (B) paralleler Einschubstab (50, 50ₐ, 51ₖ) angefügt ist, wobei der Einschubstab (50, 50ₐ, 51ₖ) mit seinem Profilband (44) durch eine Schweißnaht (48) verbunden ist, dass der Einschubstab (50, 50ₐ, 51ₖ) in einen seitlichen Schlitz (31) des Trägerprofils (13) eingreift, und dass das Trägerprofil (13) kastenartig ausgebildet ist und seiner Oberfläche (28) ein plattenförmiges Profilband (44) aufliegt, an dessen Längskanten (70) jeweils der winkelartige oder gebogene Einschubstab (50, 50ₐ, 51ₖ) durch die Schweißnaht (48) gehalten ist.

17. Verbundprofil nach Anspruch 16,
**dadurch gekennzeichnet,**
**dass** die Breite (b) des Profilbandes (44) kürzer ist als die Breite (b₁) des Trägerprofils (13) und jeder der Einschubstäbe (50, 50ₐ, 51ₖ) in einen Schlitz (31) eingeschoben ist, der von einer Stufeneinformung (68) im Trägerprofil ausgeht.

18. Verbundprofil nach Anspruch 17,
**dadurch gekennzeichnet,**
**dass** die Stufeneinformung (68) an zwei einander gegenüberliegenden Eckbereichen des Trägerprofils (13) angeordnet ist.

19. Verbundprofil nach einem der Ansprüche 1 bis 18, **dadurch gekennzeichnet,**
**dass** das Profilband oder Deckprofil (40, 41) aus Edelstahl geformt ist.

20. Verbundprofil nach einem der Ansprüche 1 oder 19, **dadurch gekennzeichnet,**
**dass** der Anker- oder Einschubstab (50, 50ₐ, 50_{b}, 50_{c}, 50ₑ, 50_{g}; 51, 51ₖ; 52) aus dem Werkstoff des Profilbandes oder Deckprofils (40, 41) geformt ist.

21. Verbundprofil nach einem der Ansprüche 1 bis 20,
**dadurch gekennzeichnet,**
**dass** die Dicke (a₁, a₂) des freien Endes des Einschubstabes (50, 50ₐ, 50_{b}, 50_{c}, 50ₑ; 51ₖ) der Breite (a) des Schlitzes (30, 30ₐ, 31, 32, 35) entspricht.

22. Verbundprofil nach einem der Ansprüche 1 bis 5,
**dadurch gekennzeichnet,**
**dass** die Schweißnaht (48) an der Stirnfläche (47) des Seitenschenkels (46) verläuft.

23. Verbundprofil nach wenigstens einem der Ansprüche 1 bis 15,
**dadurch gekennzeichnet,**
**dass** die schlitzartige Einformung (30, 30ₐ, 30_{c}; 35) des Schienenkopfes (22, 22ₐ bis 22ₑ) von einer in Abstand zur Kopfoberfläche (28) ausgeformten und von der Unterfläche (26) des Schienkopfes (22, 22ₐ bis 22ₑ) begrenzten Längsrippe (34, 34ₐ) untergriffen ist.

24. Verfahren zum Herstellen eines Verbundprofils nach wenigstens einem der voraufgehenden Ansprüche,
**dadurch gekennzeichnet,**
**dass** aus Leichtmetallwerkstoff ein Trägerprofil mit einer Kopffläche sowie diese beidseits begleitenden Steckschlitzen stranggepresst wird, dass in jeden Steckschlitz ein Anker- oder Einschubstab eingebracht und an einen aus dem Steckschlitz ragenden Abschnitt des Einschubstabes ein die Kopffläche übergreifendes Profilband oder Deckprofil aus härterem Werkstoff angelegt wird.

25. Verfahren nach Anspruch 24,
**dadurch gekennzeichnet, dass**
der Einschubstab an dem Trägerprofil festgerollt oder festgedrückt wird.

26. Verfahren nach Anspruch 24 oder 25,
**dadurch gekennzeichnet,**
**dass** das Profilband auf das Trägerprofil mit Vorspannung aufgedrückt wird.

27. Verfahren nach einem der Ansprüche 24 bis 26,
**dadurch gekennzeichnet,**
**dass** der Einschubstab mit dem Profilband durchgehend verschweißt wird.

## Claims

1. Composite profile comprising a carrier profile (12, 13) extruded from light metal material and a profile strip (40, 41) which is made of a harder metal and spans the top surface (28) of the carrier profile (12, 13), wherein the profile strip (40, 41) approximately rests against the top surface (28) of the carrier profile (12, 13),
**characterised in that**
an insertion rod (50) is attached to each of the longitudinal sides of the profile strip (40) so as to be parallel to the longitudinal axis (B) thereof, wherein the insertion rod (50) is connected to its profile strip (40) by a weld seam (48), **in that** the insertion rod (50) engages in a lateral slot (30) of the carrier profile (12, 13), and **in that** the groove-like insertion rod (50) has an approximately V-shaped cross-section which, together with one groove arm (49) rests against the inner surface of the side arm (46) of the profile strip (40), wherein the other groove arm (49ᵢ) is inclined towards the longitudinal axis (B) of the profile strip (40).

2. Composite profile according to claim 1,
**characterised by**
a V-shaped cross-section of the slot (30) in the rail head (22) of the carrier profile (12), one of the slot arms being a longitudinal indentation (32) in the lateral or longitudinal surface (24) of the rail head (22).

3. Composite profile according to either claim 1 or claim 2,
**characterised by**
an apex angle (w₁) of the groove cross-section of approximately 60° to 70°, preferably 65°.

4. Composite profile comprising a carrier profile (12, 13) extruded from light metal material and a profile strip (40, 41) which is made of a harder metal and spans the top surface (28) of the carrier profile (12, 13), wherein the profile strip (40, 41) approximately rests against the top surface (28) of the carrier profile (12, 13),
**characterised in that**
an insertion rod (50ₐ) is attached to each of the longitudinal sides of the profile strip (40, 41) so as to be parallel to the longitudinal axis (B) thereof, wherein the insertion rod (50ₐ) is connected to its profile strip (40, 41) by a weld seam (48), **in that** the insertion rod (50ₐ) engages in a lateral slot (30ₐ, 31) of the carrier profile (12, 13), and **in that** the insertion rod (50ₐ) has an angular cross-section which, together with one groove arm (55) rests against the inner surface of the side arm (46) of the profile strip (40, 41), wherein the other groove arm (55ᵢ) is inclined away from or towards the base plate (42) of the profile strip (40, 41).

5. Composite profile according to claim 4,
**characterised in that**
the angle formd by the two groove arms (55, 55ᵢ) is greater than 90°, preferably approximately 110°.

6. Composite profile comprising a carrier profile (12, 13) extruded from light metal material and a profile strip (40, 41) which is made of a harder metal and spans the top surface (28) of the carrier profile (12, 13), wherein the profile strip (40, 41) approximately rests against the top surface (28) of the carrier profile (12, 13),
**characterised in that**
an insertion rod (50_{b}) is attached to each of the longitudinal sides of the profile strip (40) so as to be parallel to the longitudinal axis (B) thereof, wherein the insertion rod (50_{b}) is connected to its profile strip (40) by a weld seam (48), **in that** the insertion rod (50_{b}) engages in a lateral slot (35) of the carrier profile (12), and **in that** the vertex of the approximately semi-circular insertion rod (50_{b}) is welded to the end face (47) of the side arm (46) of the profile strip (40).

7. Composite profile according to claim 6,
**characterised in that**
two insertions rods (50_{b}) of the profile strip (40) are arranged on a common centre axis (M) so as to be open towards each other.

8. Composite profile according to claim 7,
**characterised in that**
the centre axis (M) of the insertion rods (50_{b}) intersects a cross-sectional longitudinal axis (Q) of the composite profile (10_{b}).

9. Composite profile according to either claim 7 or claim 8,
**characterised in that**
the centre axis (M) of the insertion rods (50_{b}) in each of the two longitudinal surfaces (24) of the rail head (22_{g}) defines the position of a bead (36), the cross-section of which is adapted to the shape of the interior of the insertion rod and which is limited on each side by a respective insertion slot (35).

10. Composite profile comprising a carrier profile (12, 13) extruded from light metal material and a profile strip (40, 41) which is made of a harder metal and spans the top surface (28) of the carrier profile (12, 13), wherein the profile strip (40, 41) approximately rests against the top surface (28) of the carrier profile (12, 13),
**characterised in that**
an insertion rod (50_{c}) is attached to each of the longitudinal sides of the profile strip (40) so as to be parallel to the longitudinal axis (B) thereof, wherein the insertion rod (50_{c}) is connected to its profile strip (40) by a weld seam (48), **in that** the insertion rod (50_{c}) engages in a lateral slot (30_{c}) of the carrier profile (12), and **in that** the cross-section of the insertion rod (50_{c}) for the rail head (22_{d}) consists of a quadrant portion (54) and a linear portion (49_{c}), the linear portion (49_{c}) resting against the inside of the side arm (46) of the profile strip (40) and being welded to the end face (47) thereof.

11. Composite profile according to claim 10,
**characterised in that**
the quadrant portions (54) of the two insertion rods (50_{c}) are directed towards or away from the base plate (42) of the profile strip (40).

12. Composite profile according to either claim 10 or to claim 11,
**characterised in that**
the slot (30_{c}) of the rail head (22_{d}) for the linear portion (49_{c}) of the insertion rod (50_{c}) comprises a longitudinal indentation (32) in the longitudinal surface (24) of the rail head (22_{d}).

13. Composite profile comprising a carrier profile (12, 13) extruded from light metal material and a profile strip (40, 41) which is made of a harder metal and spans the top surface (28) of the carrier profile (12, 13), wherein the profile strip (40, 41) approximately rests against the top surface (28) of the carrier profile (12, 13),
**characterised in that**
an insertion rod (50ₑ) is attached to each of the longitudinal sides of the profile strip (40) so as to be parallel to the longitudinal axis (B) thereof, wherein the insertion rod (50ₑ) is connected to its profile strip (40) by a weld seam (48), **in that** the insertion rod (50ₑ) engages in a lateral slot of the carrier profile (12), and **in that** the insertion rod (50ₑ), which is hook-shaped in cross-section and has a free hook portion (56) extending at a distance (k₁) from the profile strip side arm (46) and directed towards the base plate (42) of the profile strip (40), is welded at the other end to the end face (47) of the side arm (46).

14. Composite profile comprising a carrier profile (12, 13) extruded from light metal material and a profile strip (40, 41) which is made of a harder metal and spans the top surface (28) of the carrier profile (12, 13), wherein the profile strip (40, 41) approximately rests against the top surface (28) of the carrier profile (12, 13),
**characterised in that**
an insertion rod (50ₑ) is attached to each of the longitudinal sides of the profile strip (40) so as to be parallel to the longitudinal axis (B) thereof, wherein the insertion rod (50ₑ) is connected to its profile strip (40) by a weld seam (48), **in that** the insertion rod (50ₑ) engages in a lateral slot of the carrier profile (12), and **in that** the insertion rod (50ₑ), which is hook-shaped in cross-section and has a free hook portion (56) at a distance (k₁) from the side arm (46) of the profile strip (40) and directed away from the base plate (42) thereof, is welded at the other end to the end face (47) of the side arm.

15. Composite profile comprising a carrier profile (12, 13) extruded from light metal material and a profile strip (40, 41) which is made of a harder metal and spans the top surface (28) of the carrier profile (12, 13), wherein the profile strip (40, 41) approximately rests against the top surface (28) of the carrier profile (12, 13),
**characterised in that**
an insertion rod (50_{g}) is attached to each of the longitudinal sides of the profile strip (40) so as to be parallel to the longitudinal axis (B) thereof, wherein the insertion rod (50_{g}) is connected to its profile strip (40) by a weld seam (48), **in that** the insertion rod (50_{g}) engages in a lateral slot of the carrier profile (12), and **in that** an insertion rod (50_{g}) which is steplike in cross-section is provided, which is welded to the inner surface of the profile strip side arm (46) at one end and with its free, hooked end (56) engages behind a hooked ridge (37) of the longitudinal surface (24) of the rail head (22_{g}) at the other end.

16. Composite profile comprising a carrier profile (12, 13) extruded from light metal material and a profile strip (40, 41) which is made of a harder metal and spans the top surface (28) of the carrier profile (12, 13), wherein the profile strip approximately rests against the top surface (28) of the carrier profile (12, 13),
**characterised in that**
an insertion rod (50, 50ₐ, 51ₖ) is attached to each of the longitudinal sides of the profile strip (44) so as to be parallel to the longitudinal axis (B) thereof, wherein the insertion rod (50, 50ₐ, 51ₖ) is connected to its profile strip (44) by a weld seam (48), **in that** the insertion rod (50, 50ₐ, 51ₖ) engages in a lateral slot (31) of the carrier profile (13), and **in that** the carrier profile (13) is formed in the shape of a box, and a plate-shaped profile strip (44) is located on the upper surface (28) thereof, an angular or curved insertion rod (50, 50ₐ, 51ₖ) being held on the longitudinal edges (70) of the profile strip (44) by the weld seam (48).

17. Composite profile according to claim 16,
**characterised in that**
the width (b) of the profile strip (44) is shorter than the width (b₁) of the carrier profile (13), and each of the insertion rods (50, 50ₐ, 50ₖ) is inserted into a slot (31) which extends from a stepped indentation (68) in the carrier profile.

18. Composite profile according to claim 17.
**characterised in that**
the stepped indentations (68) is arranged on two mutually opposed corner regions of the carrier profile (13).

19. Composite profile according to any one of claims 1 to 18,
**characterised in that**
the profile strip or cover profile (40, 41) is formed from stainless steel.

20. Composite profile according to either claim 1 or claim 19,
**characterised in that**
the anchor or insertion rod (50, 50ₐ, 50_{b}, 50_{c}, 50ₑ, 50_{g}, 51, 51ₖ, 52) is formed from the material of the profile strip or cover profile (40, 41).

21. Composite profile according to any one of claims 1 to 20,
**characterised in that**
the thickness (a₁, a₂) of the free end of the insertion rod (50, 50ₐ, 50_{b}, 50_{c}, 50ₑ, 51ₖ) corresponds to the width (a) of the slot (30, 30ₐ, 31, 32, 35).

22. Composite profile according to any one claims 1 to 5,
**characterised in that**
the weld seam (48) extends on the end face (47) of the side arm (46).

23. Composite profile according to at least one of the claims 1 to 15,
**characterised in that**
the slot-like indentation (30, 30ₐ, 30_{c}, 35) of the rail head (22, 22ₐ to 22ₑ) is engaged from below by a longitudinal rib (34, 34ₐ) which is formed at a distance from the top surface (28) and is limited by the lower surface (26) of the rail head (22, 22ₐ to 22ₑ).

24. Method for producing a composite profile according to at least one of the preceding claims,
**characterised in that**
a carrier profile having a top surface and insertion slots along both sides of said surface is extruded from light metal material, and **in that** an anchor or insertion rod is introduced into each insertion slot and a profile strip or cover profile made of harder material and overlapping the top surface is laid against a portion of the insertion rod projecting out of the insertion slot.

25. Method according to claim 24,
**characterised in that**
the insertion rod is rolled or pressed firmly against the carrier profile.

26. Method according to either claim 24 or claim 25,
**characterised in that**
the profile strip is pressed onto the carrier profile with bias.

27. Method according to any one of claims 24 to 26,
**characterised in that**
the insertion rod is continuously welded to the profile strip.

## Revendications

1. Profilé composite comprenant un profilé porteur (12, 13) filé à partir d'un matériau en métal léger ainsi qu'une bande profilée (40, 41) en métal plus dur recouvrant sa table (28), dans lequel la bande profilée (40, 41) repose sensiblement sur la table (28) du profilé porteur (12, 13),
**caractérisé en ce que**
sur chacun des côtés longitudinaux de la bande profilée (40) est disposée respectivement une baguette d'insertion (50) parallèle à son axe longitudinal (B), dans lequel la baguette d'insertion est liée à sa bande profilée (40, 41) par une soudure (48), **en ce que** la baguette d'insertion (50) est engagée dans une fente latérale (30) du profilé porteur (12, 13), et **en ce que** la baguette d'insertion (50) formant rigole présente une section transversale à peu près en forme de V, disposé contre le côté intérieur de la branche latérale (46) de la bande profilée (40) par l'une des branches de rigole (49), et dans lequel l'autre branche de rigole (49ᵢ) est dirigée vers l'axe longitudinal (B) de la bande profilée (40).

2. Profilé composite selon la revendication 1,
**caractérisé en ce que**
la fente (30) comporte une section transversale en forme de V dans le champignon de rail (22) du profilé porteur (12), dans lequel une des branches de la fente est un enfoncement longitudinal (32) dans la surface latérale ou longitudinale (24) du champignon de rail (22).

3. Profilé composite selon la revendication 1 ou 2,
**caractérisé par** un
angle d'ouverture (w₁) de la section transversale de rigole d'environ 60° à 70°, préférentiellement 65°.

4. Profilé composite comprenant un profilé porteur (12, 13) filé à partir d'un matériau en métal léger ainsi qu'une bande profilée (40, 41) en métal plus dur recouvrant sa table (28), dans lequel la bande profilée (40, 41) repose sensiblement sur la table (28) du profilé porteur (12, 13),
**caractérisé en ce que**
sur chacun des côtés longitudinaux de la bande profilée (40, 41) est disposée respectivement une baguette d'insertion (50ₐ) parallèle à son axe longitudinal (B), dans lequel la baguette d'insertion est liée à sa bande profilée (40, 41) par une soudure (48), **en ce que** la baguette d'insertion (50a) est engagée dans une fente latérale (30ₐ, 31) du profilé porteur (12, 13), et **en ce que** la baguette d'insertion (50ₐ) présente une section transversale en forme de coude, disposé en appui par l'une des branches de rigole (55) du côté intérieur de la branche latérale (46) de la bande profilée (40, 41), et dans lequel l'autre branche de rigole (55ᵢ) est incliné en direction ou en direction opposée de la plaque de base (42) de la bande profilée.

5. Profilé composite selon la revendication 4,
**caractérisé en ce que**
l'angle délimité par les deux branches de rigole (55, 55ᵢ) est supérieur à 90°, préférentiellement environ 110°.

6. Profilé composite comprenant un profilé porteur (12, 13) filé à partir d'un matériau en métal léger ainsi qu'une bande profilée (40, 41) en métal plus dur recouvrant sa table (28), dans lequel la bande profilée (40, 41) repose sensiblement sur la table (28) du profilé porteur (12, 13),
**caractérisé en ce que**
sur chacun des côtés longitudinaux de la bande profilée (40, 41) est disposée respectivement une baguette d'insertion (50_{b}) parallèle à son axe longitudinal (B), dans lequel la baguette d'insertion est liée à sa bande profilée (40, 41) par une soudure (48), **en ce que** la baguette d'insertion (50_{b}) est engagée dans une fente latérale (30) du profilé porteur (12, 13), et **en ce que** la baguette d'insertion (50_{b}) de forme approximativement semi-circulaire est soudé en son zénith à la surface frontale (47) de la branche latérale (46) de la bande profilée (40).

7. Profilé composite selon la revendication 6,
**caractérisé en ce que**
les deux baguettes d'insertion (50_{b}) de la bande profilée (40) sont disposées le long d'un axe médian (M) commun et ouvertes l'une vers l'autre.

8. Profilé composite selon la revendication 7,
**caractérisé en ce que**
l'axe médian (M) des baguettes d'insertion (50_{b}) croise un axe longitudinal de section transversale (Q) du profilé composite (10_{b}).

9. Profilé composite selon la revendication 7 ou 8,
**caractérisé en ce que**
l'axe médian (M) des baguettes d'insertion (50_{b}) définit dans chacune des surfaces longitudinales (24) du champignon de rail (22_{g}) la position d'un bourrelet (36), dont la section transversale est adaptée à la forme de l'espace intérieur de la baguette d'insertion et est délimité de part et d'autre par respectivement une fente d'insertion (35).

10. Profilé composite comprenant un profilé porteur (12, 13) filé à partir d'un matériau en métal léger ainsi qu'une bande profilée (40, 41) en métal plus dur recouvrant sa table (28), dans lequel la bande profilée (40, 41) repose sensiblement sur la table (28) du profilé porteur (12, 13),
**caractérisé en ce que**
sur chacun des côtés longitudinaux de la bande profilée (40, 41) est disposée respectivement une baguette d'insertion (50_{c}) parallèle à son axe longitudinal (B), dans lequel la baguette d'insertion est liée à sa bande profilée (40, 41) par une soudure (48), **en ce que** la baguette d'insertion (50_{c}) est engagée dans une fente latérale (30_{c}) du profilé porteur (12, 13), et **en ce que** la section transversale de la baguette d'insertion (50_{c}) pour le champignon de rail (22_{d}) est composée d'une portion en quart de cercle (54) et d'une portion linéaire (49_{c}), cette dernière étant en appui par son côté intérieur à la branche latérale (46) de la bande profilée (40) et est soudée à la surface frontale (47) de celle-ci.

11. Profilé composite selon la revendication 10,
**caractérisé en ce que**
la portion en quart de cercle (54) des deux baguettes d'insertion (50_{c}) est dirigée en direction de la plaque de base (42) de la bande profilée ou s'éloignant de celle-ci.

12. Profilé composite selon la revendication 10 ou 11, **caractérisé en ce que** la fente (30_{c}) du champignon de rail (22_{d}) comporte un renfoncement longitudinal (32) dans la surface longitudinale (24) du champignon de rail pour la portion linéaire (49_{c}) de la baguette d'insertion (50_{c}).

13. Profilé composite comprenant un profilé porteur (12, 13) filé à partir d'un matériau en métal léger ainsi qu'une bande profilée (40, 41) en métal plus dur recouvrant sa table (28), dans lequel la bande profilée (40, 41) repose sensiblement sur la table (28) du profilé porteur (12, 13),
**caractérisé en ce que**
sur chacun des côtés longitudinaux de la bande profilée (40, 41) est disposée respectivement une baguette d'insertion (50ₑ,) parallèle à son axe longitudinal (B), dans lequel la baguette d'insertion est liée à sa bande profilée (40, 41) par une soudure (48), **en ce que** la baguette d'insertion (50ₑ) est engagée dans une fente latérale du profilé porteur (12, 13), et **en ce que** la baguette d'insertion (50ₑ) de section transversale en forme de crochet et comportant une portion de crochet libre (56) longeant à une distance (k₁) la branche latérale (46) de la bande profilée (40), et dirigée vers la plaque de base (42) de la bande profilée (40) est soudée à l'autre extrémité à la surface frontale (47) de la branche latérale.

14. Profilé composite comprenant un profilé porteur (12, 13) filé à partir d'un matériau en métal léger ainsi qu'une bande profilée (40, 41) en métal plus dur recouvrant sa table (28), dans lequel la bande profilée (40, 41) repose sensiblement sur la table (28) du profilé porteur (12, 13),
**caractérisé en ce que**
sur chacun des côtés longitudinaux de la bande profilée (40, 41) est disposée respectivement une baguette d'insertion (50ₑ) parallèle à son axe longitudinal (B), dans lequel la baguette d'insertion est liée à sa bande profilée (40, 41) par une soudure (48), **en ce que** la baguette d'insertion (50ₑ) est engagée dans une fente latérale du profilé porteur (12, 13), et **en ce que** la baguette d'insertion (50ₑ) de section transversale en forme de crochet présentant une portion de crochet libre (56), longeant à une distance (k₁) la branche latérale (46) de la bande profilée (40) et dirigée en s'éloignant de sa plaque de base (42) est soudée à l'autre extrémité à la surface frontale (47) de la branche latérale.

15. Profilé composite comprenant un profilé porteur (12, 13) filé à partir d'un matériau en métal léger ainsi qu'une bande profilée (40, 41) en métal plus dur recouvrant sa table (28), dans lequel la bande profilée (40, 41) repose sensiblement sur la table (28) du profilé porteur (12, 13),
**caractérisé en ce que**
sur chacun des côtés longitudinaux de la bande profilée (40, 41) est disposée respectivement une baguette d'insertion (50_{g}) parallèle à son axe longitudinal (B), dans lequel la baguette d'insertion est liée à sa bande profilée (40, 41) par une soudure (48), **en ce que** la baguette d'insertion (50_{g}) est engagée dans une fente latérale du profilé porteur (12, 13), et **en ce qu'**une baguette d'insertion (50_{g}) de section transversale en forme d'escalier est prévu dont une extrémité est soudée à la surface intérieure de la branche latérale (46) de la bande profilée dont l'autre extrémité s'engage par son extrémité de crochet libre (56) derrière une moulure formant un tenon (37) de la surface longitudinale (24) du champignon de rail (22_{g}).

16. Profilé composite comprenant un profilé porteur (12, 13) filé à partir d'un matériau en métal léger ainsi qu'une bande profilée (40, 41) en métal plus dur recouvrant sa table (28), dans lequel la bande profilée (40, 41) repose sensiblement sur la table (28) du profilé porteur (12, 13),
**caractérisé en ce que**
sur chacun des côtés longitudinaux de la bande profilée (40, 41) est disposée respectivement une baguette d'insertion (50, 50a, 51k) parallèle à son axe longitudinal (B), dans lequel la baguette d'insertion est liée à sa bande profilée (40, 41) par une soudure (48), **en ce que** la baguette d'insertion (50, 50a, 51k) est engagée dans une fente latérale (31) du profilé porteur (12, 13), et **en ce que** le profilé porteur (13) est en forme de caisson et **en ce que** sa surface (28) est recouverte d'une bande profilée (44) en forme de plaques, à chacune des arêtes longitudinales (70) de laquelle est fixé par la soudure (48) la baguette d'insertion (50, 50ₐ, 51ₖ) en forme de coude ou courbe.

17. Profilé composite selon la revendication 16,
**caractérisé en ce que**
la largeur (b) de la bande profilée (44) est inférieure à la largeur (b1) du profilé porteur (13) et **en ce que** chacune des baguettes d'insertion (50, 50ₐ, 51ₖ) est insérée dans une fente (31) partant d'une conformation en escalier (68) du profil porteur.

18. Profilé composite selon la revendication 17,
**caractérisé en ce que**
les conformations en escalier (68) sont disposées sur deux arêtes disposées en vis-à-vis l'une en face de l'autre du profilé porteur (13).

19. Profilé composite selon l'une des revendications 1 à 18,
**caractérisé en ce que**
la bande profilée ou le profilé de couverture (40, 41) est composé d'acier inoxydable.

20. Profilé composite selon l'une des revendications 1 ou 19,
**caractérisé en ce que**
la baguette d'insertion ou d'ancrage (50, 50ₐ, 50_{b}, 50_{c}, 50ₑ, 50_{g}; 51, 51ₖ; 52) est composée du matériau de la bande profilée ou le profilé de couverture (40, 41).

21. Profilé composite selon l'une des revendications 1 à 20,
**caractérisé en ce que**
l'épaisseur (a1, a2) de l'extrémité libre de la baguette d'insertion (50, 50ₐ, 50_{b}, 50_{c}, 50ₑ; 51ₖ) correspond à l'épaisseur (a) de la fente (30, 30ₐ, 31, 32, 35).

22. Profilé composite selon l'une des revendications 1 à 5,
**caractérisé en ce que**
la soudure (48) s'étend sur la surface frontale (47) de la branche latérale (46).

23. Profilé composite selon l'une des revendications 1 à 15,
**caractérisé en ce que**
le renfoncement formant une fente (30, 30a, 30_{c}; 35) du champignon de rail (22, 22ₐ à 22ₑ) est sous-tendue par une nervure longitudinale (34, 34a) façonnée à distance de la table (28) et délimitée par la surface inférieure (26) du champignon de rail (22, 22ₐ à 22ₑ).

24. Procédé de fabrication d'un profilé composite selon au moins une des revendications précédentes,
**caractérisé en ce que**
un profilé porteur comportant une table ainsi que les deux fentes d'enfilage associées de chaque côté, est filé en matériau en métal léger, **en ce qu'**une baguette d'insertion ou d'ancrage est disposée dans chaque fente d'enfilage et **en ce qu'**une bande profilée ou une bande de couverture recouvrant la table en matériau plus dur est en appui contre une portion de la baguette d'insertion dépassant de la fente d'enfilage.

25. Procédé de fabrication d'un profilé composite selon la revendication 24,
**caractérisé en ce que**
la baguette d'insertion est laminée ou pressée sur le profilé porteur.

26. Procédé de fabrication d'un profilé composite selon la revendication 24 ou 25,
**caractérisé en ce que**
la bande profilée est pressée sur le profilé porteur à l'état précontraint.

27. Procédé de fabrication d'un profilé composite selon la revendication 24 à 26
**caractérisé en ce que**
la baguette d'insertion est soudée en continu à la bande profilée.
